# EUROPEAN PATENT APPLICATION

(11) **EP 4 660 524 A1**
(43) Date of publication of application: **10.12.2025**
(21) Application number: 24750112.5
(22) Date of filing: 25.01.2024
(51) Int. Cl.: F21S 41/663, F21S 41/26, F21S 41/143, F21S 41/265, F21W 102/145, F21Y 115/10, B60Q 1/00, F21S 41/148, F21S 41/151, F21S 41/255, F21S 41/32, F21S 41/43, F21S 45/47

(54) **VEHICULAR LAMP**

(30) Priority: 03.02.2023 JP 2023015092
(71) Applicant: Koito Manufacturing Co., Ltd., Shinagawa-ku, Tokyo 141-0001 (JP)
(72) Inventor: TANAKA, Hidetada, Shizuoka-shi, Shizuoka 424-8764 (JP); NAGANAWA, Masahito, Shizuoka-shi, Shizuoka 424-8764 (JP)
(74) Representative: Cabinet Beau de Loménie
(86) International application number: PCT/JP2024/002173
(87) International publication number: WO 2024/162163

(57) **Abstract**

A vehicle lighting device including an ADB lighting device unit can form an ADB light distribution pattern as a desired form while restraining heat generation of a plurality of light-emitting elements constituting the ADB lighting device unit. An ADB lighting device unit 20R is configured to emit outgoing lights from six light-emitting elements 22A to 22F through six projection lenses 32A to 32F in a lighting-device forward direction. On that occasion, outgoing light from the projection lens 32F positioned at a left end portion is emitted in a direction inclined to the side of a right end portion with respect to a lighting-device front direction. Thereby, a part of the outgoing light from the projection lens 32F is prevented from being intercepted by a low-beam lighting device unit 40R, even though the low-beam lighting device unit 40R is disposed at a left lateral vicinity of the ADB lighting device unit 20R. Thereby, the ADB light distribution pattern is formed as a desired form.

## Description

### Technical Field

The invention in the present application relates to a vehicle lighting device including an ADB lighting device unit.

### Background Art

Conventionally, as a configuration of a vehicle lighting device, there is known a configuration of including an ADB (that is, adaptive driving beam) lighting device unit configured to be able to form a plurality of small light distribution patterns in a parallel arrangement at a position that overlaps with a cutoff line of a low-beam light distribution pattern.

As such an ADB lighting device unit, "PTL 1" describes an ADB lighting device unit configured to be able to form a plurality of small light distribution patterns in a parallel arrangement by emitting outgoing lights from a plurality of light-emitting elements through projection lenses in a lighting-device forward direction.

The ADB lighting device unit described in "PTL 1" is configured such that an ADB light distribution pattern is formed by all or some of the small light distribution patterns.

### Citation List

### Patent Literature

PTL 1: Japanese Unexamined Patent Application Publication No. 2016-81874

### Summary of Invention

### Technical Problem

The ADB lighting device unit described in the above "PTL 1" is configured such that the light-emitting elements are disposed in a state of being close to each other, for forming the small light distribution patterns in a parallel arrangement, and therefore, the heat generation of the light-emitting elements easily occurs.

In response, when a configuration of including a plurality of projection lenses disposed in a state of being arrayed in a right-left direction and a plurality of light-emitting elements disposed on a lighting-device rearward side thereof is adopted and furthermore a configuration of forming the respective small light distribution patterns by emitting outgoing lights from the respective light-emitting elements through the respective projection lenses in the lighting-device forward direction is adopted as the configuration of the ADB lighting device unit, the light-emitting elements can be configured to be disposed in a state of being away from each other, and thereby, the heat generation of the light-emitting elements can be restrained.

Meanwhile, in the case where another structure (for example, a low-beam lighting device unit, an extension panel, or the like) is disposed at a lateral vicinity of the ADB lighting device unit as the configuration of the vehicle lighting device, it is possible that a part of the outgoing light of a projection lens that is of the projection lenses and that is positioned at an end portion in the right-left direction is intercepted by the above other structure. Moreover, in such a case, the ADB light distribution pattern cannot be formed as a desired form.

The invention in the present application has been made in view of the circumstances, and has an object to provide a vehicle lighting device that includes an ADB lighting device unit and that can form the ADB light distribution pattern as a desired form while restraining the heat generation of a plurality of light-emitting elements constituting the ADB lighting device unit.

### Solution to Problem

In the invention in the present application achieves the above object by devising the configuration of the ADB lighting device unit.

That is, a vehicle lighting device according to the invention in the present application is
a vehicle lighting device including an ADB lighting device unit configured to be able to form a plurality of small light distribution patterns in a parallel arrangement at a position that overlaps with a cutoff line of a low-beam light distribution pattern, characterized in that:
the ADB lighting device unit includes a plurality of projection lenses that is disposed in a state of being arrayed in a right-left direction, and a plurality of light-emitting elements that is disposed on a lighting-device rearward side of the projection lenses, and is configured to form the respective small light distribution patterns by emitting outgoing lights from the respective light-emitting elements through the respective projection lenses in a lighting-device forward direction; and
the ADB lighting device unit is configured such that an outgoing light from a projection lens that is of the projection lenses and that is positioned at one end portion in the right-left direction is emitted in a direction that is inclined to a side of the other end portion in the right-left direction, with respect to a lighting-device front direction.

As for the above "projection lenses", the disposition number and each specific shape are not particularly limited, as long as the above "projection lenses" are disposed in parallel in lighting-device front view.

As for the above "light-emitting elements", the specific disposition and the specific shape of each light-emitting surface are not particularly limited, as long as the above "light-emitting elements" are disposed on the lighting-device rearward side of the projection lenses.

The above "ADB lighting device unit" is configured such that the outgoing light from the projection lens that is of the projection lenses and that is positioned at one end portion in the right-left direction is emitted in the direction that is inclined to the side of the other end portion in the right-left direction, with respect to the lighting-device front direction, and the specific configuration for realizing this is not particularly limited.

The above "one end portion in the right-left direction" may be any of the right and left end portions, and may be each of both right and left end portions. In the case of the latter, the left end portion is "one end portion in the right-left direction" and is "the other end portion in the right-left direction", and the right end portion is "the other end portion in the right-left direction" and is "one end portion in the right-left direction".

### Advantageous Effects of Invention

The vehicle lighting device according to the invention in the present application includes the ADB lighting device unit configured to be able to form the small light distribution patterns in a parallel arrangement by emitting the outgoing lights from the light-emitting elements through the projection lenses in the lighting-device forward direction, and therefore, can form the ADB light distribution pattern with all or some of the small light distribution patterns.

Furthermore, the ADB lighting device unit includes the projection lenses disposed in a state of being arrayed in the right-left direction and the light-emitting elements disposed on the lighting-device rearward side thereof, and is configured to form the respective small light distribution patterns by emitting the outgoing lights from the respective light-emitting elements through the respective projection lenses in the lighting-device forward direction, and therefore, the light-emitting elements can be configured to be disposed so as to be sufficiently away from each other. Thereby, the heat release of the light-emitting elements is easily performed, and therefore, the heat generation can be restrained.

On that occasion, the ADB lighting device unit is configured such that the outgoing light from the projection lens that is of the projection lenses and that is positioned at one end portion in the right-left direction is emitted in the direction that is inclined to the side of the other end portion in the right-left direction, with respect to the lighting-device front direction. Therefore, even in the case where another structure is disposed at a lateral vicinity of the ADB lighting device unit, it is possible to prevent a part of the outgoing light from the projection lens positioned at one end portion in the right-left direction from being intercepted by the above other structure, and thereby, it is possible to form the ADB light distribution pattern as a desired form.

In this way, with the invention in the present application, in the vehicle lighting device including the ADB lighting device unit, it is possible to form the ADB light distribution pattern as a desired form, while restraining the heat generation of the light-emitting elements constituting the ADB lighting device unit.

In addition, the ADB lighting device unit is configured to emit the outgoing lights from the respective light-emitting elements through the respective projection lenses in the lighting-device forward direction, and therefore, it is possible to decrease the front-rear width, and thereby, to increase the disposition freedom of the ADB lighting device unit.

In the above configuration, furthermore, when the configuration of the ADB lighting device unit is a configuration in which an outgoing light from a projection lens that is of the projection lenses and that is at a position more distant from the other end portion is emitted in a direction that is more greatly inclined to the side of the other end portion, the small light distribution patterns can be easily formed in a well-balanced manner.

In the above configuration, furthermore, when the projection lenses are configured by a single lens member, a front surface thereof is configured by a single curved surface or flat surface, portions that are on a rear surface thereof and that respectively correspond to the projection lenses are configured by convex curved surfaces, and orientations of the convex curved surfaces are configured to be set to orientations that are different from each other among the projection lenses, it is possible to obtain the above function effects while increasing the design level of the projection lenses.

Further, by employing such a configuration, it is possible to obtain the above function effect, for example, even in the case where a configuration in which the light-emitting elements are disposed at regular intervals is employed.

In the above configuration, furthermore, when the vehicle lighting device is configured to include a low-beam lighting device unit for forming the low-beam light distribution pattern, the ADB lighting device unit and the low-beam lighting device unit are disposed in a state of being adjacent in the right-left direction, in a lighting chamber that is provided by a lamp body and a translucent cover, the ADB lighting device unit, on that occasion, is disposed so as to be positioned on a vehicle-width-directional outer side of the low-beam lighting device unit, and an end portion on a vehicle-width-directional inner side is set as the one end portion, it is possible to obtain the following function effect.

That is, in a general vehicle lighting device, the translucent cover is configured to be formed so as to extend while being inclined to the lighting-device rearward side from the vehicle-width-directional inner side toward the vehicle-width-directional outer side. However, in such a vehicle lighting device, it is possible to efficiently dispose the ADB lighting device unit and the low-beam lighting device unit in the lighting chamber, by adopting a configuration in which the ADB lighting device unit having a narrow front-rear width is disposed so as to be positioned on the vehicle-width-directional outer side.

On that occasion, it is possible to avoid the outgoing light from the projection lens positioned at the one end portion (that is, the end portion on the vehicle-width-directional inner side) from being carelessly intercepted by the low-beam lighting device unit. Accordingly, the ADB lighting device unit and the low-beam lighting device unit can be disposed in a state of being close in the right-left direction, and thereby, the right-left width can be avoided from being too wide as the configuration of the vehicle lighting device.

In the case where such a configuration is employed, when the low-beam lighting device unit is configured to include a projection lens, a light source that is disposed on a lighting-device rearward side of a back focus thereof, a reflector that reflects an outgoing light from the light source toward the projection lens, and a shade that intercepts a part of a reflected light from the reflector in a state of being disposed between the reflector and the projection lens, for forming the cutoff line of the low-beam light distribution pattern, it is possible to easily form a low-beam light distribution pattern having a clear cutoff line.

Meanwhile, in the case where such a configuration is employed, the front-rear length of the low-beam lighting device unit is long, and therefore, if the outgoing light from the projection lens disposed at the end portion on the low-beam lighting device unit side is emitted in an oblique direction that is inclined to the side of the low-beam lighting device unit with respect to the lighting-device front direction, a part of the emission light is easily intercepted by the low-beam lighting device unit. Accordingly, the employment of the configuration in the invention in the present application is particularly effective.

Further, also in the case where the ADB lighting device unit is configured to be disposed in a state of being displaced to a lighting-device rearward side of the low-beam lighting device unit, when the outgoing light from the projection lens disposed at the end portion on the low-beam lighting device unit side is emitted in an oblique direction that is inclined to the side of the low-beam lighting device unit, a part of the emission light is easily intercepted by the low-beam lighting device unit, and therefore, the employment of the configuration in the invention in the present application is particularly effective.

### Brief Description of Drawings

[FIG. 1] FIG. 1 is a planar sectional view showing a vehicle lighting device according to an embodiment in the invention in the present application.
[FIG. 2] FIG. 2 is a planar sectional view showing details of an ADB lighting device unit of the vehicle lighting device.
[FIG. 3] FIG. 3 is a III-III line sectional view of FIG. 2.
[FIG. 4] FIG. 4 is a planar sectional view showing the vehicle lighting device together with a vehicle lighting device that is paired with this.
[FIG. 5] FIG. 5 is a diagram showing light distribution patterns that are formed by emission lights from the vehicle lighting device, in which (a) is a diagram showing a low-beam light distribution pattern in a perspective manner and (b) is a diagram showing a high-beam light distribution pattern in a perspective manner.
[FIG. 6] FIG. 6 is a diagram showing light distribution patterns that are formed by emission lights from the vehicle lighting device, in which (a) is a diagram showing an intermediate light distribution pattern in a perspective manner and (b) and (c) are diagrams showing ADB light distribution patterns.
[FIG. 7] FIG. 7 is a diagram showing a first modification of the embodiment in the same manner as FIG. 2.
[FIG. 8] FIG. 8 is a diagram showing a second modification of the embodiment in the same manner as FIG. 2.

### Description of Embodiments

Embodiments of the invention in the present application will be described below with use of the drawings.

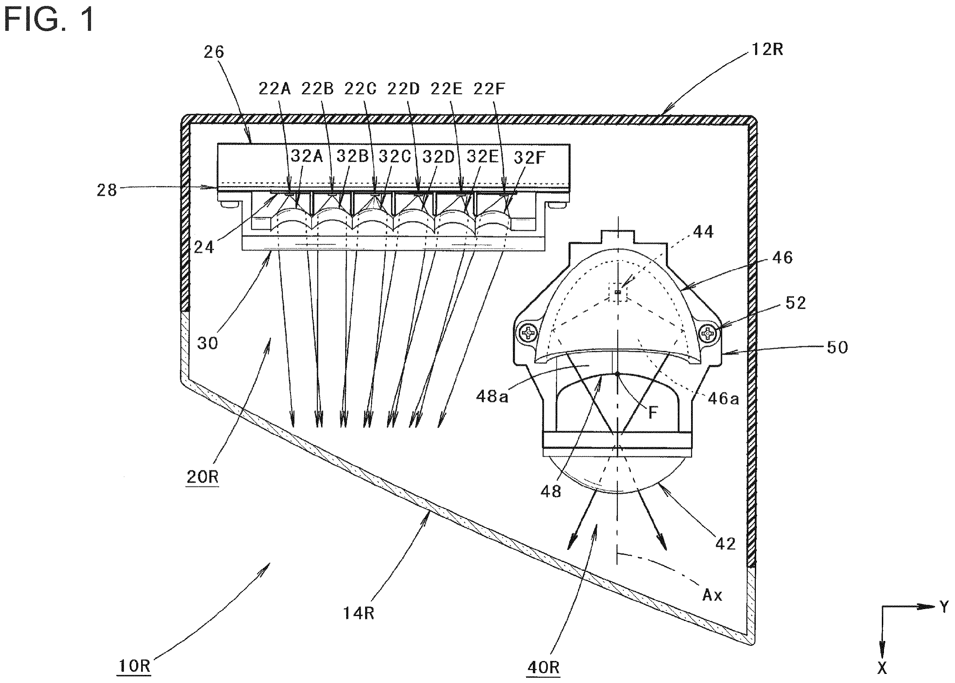

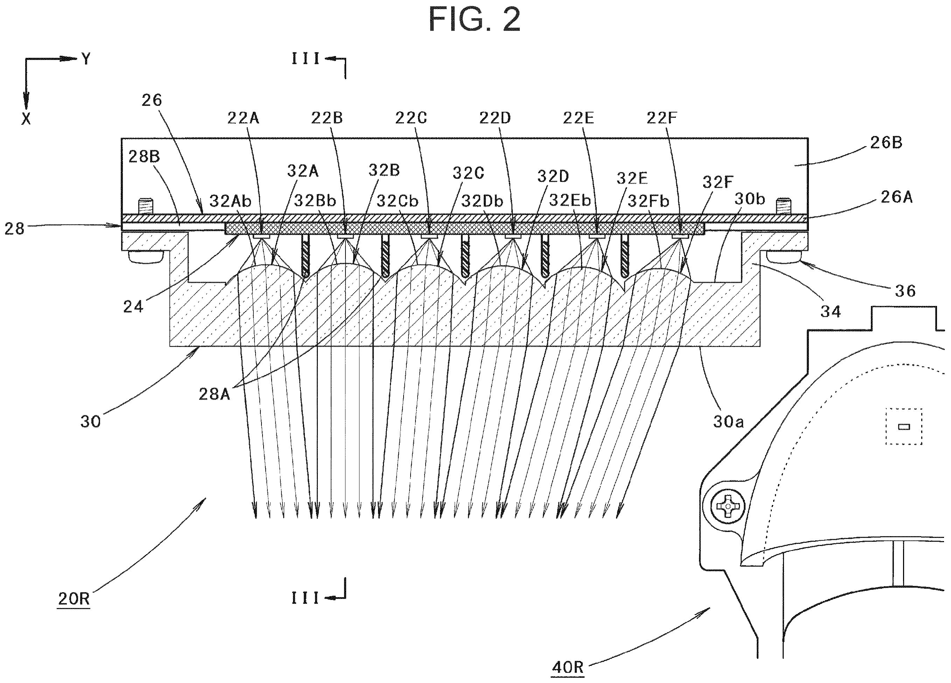

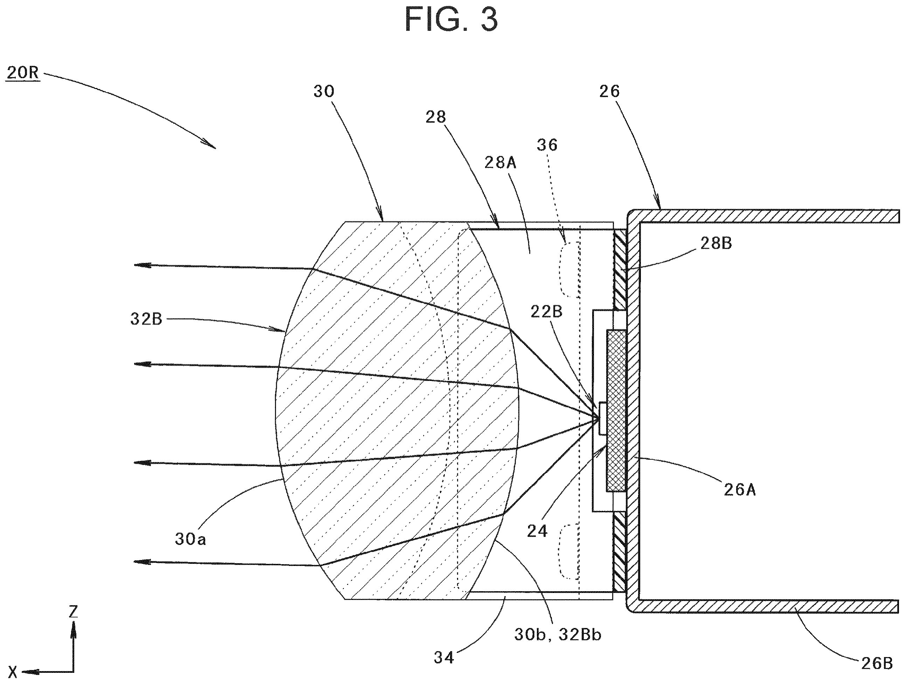

FIG. 1 is a planar sectional view showing a vehicle lighting device 10R according to an embodiment of the invention in the present application. Further, FIG. 2 is a planar sectional view showing details of an ADB lighting device unit 20R of the vehicle lighting device 10R, and FIG. 3 is a III-III line sectional view of FIG. 2.

In FIGS. 1 to 3, the direction indicated by X is a "lighting-device forward direction", the direction indicated by Y is a "leftward direction" (a "rightward direction" in lighting-device front view) orthogonal to the "lighting-device forward direction", and the direction indicated by Z is an "upward direction". The same goes for the figures other than FIGS. 1 to 3.

As shown in FIG. 1, the vehicle lighting device 10R according to the embodiment is a head lamp that is disposed at a right front end portion of the vehicle, and is configured such that an ADB lighting device unit 20R and a low-beam lighting device unit 40R are disposed in a state of being adjacent in a right-left direction in a lighting chamber formed by a lamp body 12R and a plain translucent cover 14R attached to a front-end opening portion thereof.

The ADB lighting device unit 20R and the low-beam lighting device unit 40R are disposed such that the ADB lighting device unit 20R is positioned on the right side (that is, a vehicle-width-directional outer side) of the low-beam lighting device unit 40R in the lighting chamber. On that occasion, the ADB lighting device unit 20R is disposed in a state of being displaced to a lighting-device rearward side of the low-beam lighting device unit 40R, and is disposed in a position relation of a partial overlap with the low-beam lighting device unit 40R in lighting-device front view.

Moreover, the vehicle lighting device 10R according to the embodiment is configured to be able to form a low-beam light distribution pattern by the emission light from the low-beam lighting device unit 40R, and to form a plurality of small light distribution patterns in a parallel arrangement at a position that overlaps with a cutoff line of the low-beam light distribution pattern by the emission light from the ADB lighting device unit 20R. Details of the light distribution patterns will be described later.

Before the configuration of the ADB lighting device unit 20R is described, first, the configuration of the low-beam lighting device unit 40R will be described.

The low-beam lighting device unit 40R is configured as a so-called PES-type lighting device unit.

Specifically, the low-beam lighting device unit 40R includes a projection lens 42 having an optical axis Ax that extends in a lighting-device front-rear direction, a light source 44 disposed on a lighting-device rearward side of a back focus F of the projection lens 42, a reflector 46 that reflects the outgoing light from the light source 44, toward the projection lens 42, in a state of being disposed so as to cover the light source 44 from an upward side, and a shade 48 that intercepts a part of the reflected light from the reflector 46 in a state of being disposed between the reflector 46 and the projection lens 42, for forming the above cutoff line

The projection lens 42, the light source 44, and the reflector 46 are supported by a holder member 50 that is formed integrally with the shade 48.

The projection lens 42 is a plane-convex aspheric lens in which a front surface is a convex curved surface and a rear surface is a flat surface, and projects a light source image formed on a back focus plane that is a focal plane including the back focus F, on a virtual vertical screen on a lighting-device forward side, as a reverse image.

The light source 44 is a light-emitting element (specifically, a white light-emitting diode), and includes a light-emitting surface having a horizontally-long rectangular shape. Moreover, the light source 44 is supported by the holder member 50 through a basal plate (not illustrated), in a state where the light-emitting surface is oriented upward on the optical axis Ax.

The reflector 46 is configured to cause the outgoing light from the light source 44 to enter the projection lens 42 as light that converges with respect to the right-left direction.

Specifically, a reflection surface 46a of the reflector 46 is configured as a curved surface that has a roughly elliptical surface shape and that adopts a light emission center of the light source 44 as a first focal point, and the eccentricity is set so as to gradually increase from a vertical section to a horizontal section. Thereby, the reflector 46 converges the outgoing light from the light source 44 on a point positioned on the lighting-device forward side of the back focus F, in the vertical section, and displaces the convergence position further to the lighting-device forward side, in the horizontal section. The reflector 46 is fastened and fixed by screws 52, at both right and left side portions thereof.

On the shade 48, an upward reflection surface 48a that reflects a part of the reflected light from the reflector 46 upward toward the projection lens 42 is formed. On the upward reflection surface 48a, a left-side region positioned on the left side (the right side in lighting-device front view) of the optical axis Ax is configured by a horizontal surface including the optical axis Ax, and a right-side region positioned on the right side of the optical axis Ax is configured by a horizontal surface that is lowered by a step from the left-side region through a short oblique surface. A front end edge of the upward reflection surface 48a is formed so as to extend from the back focus F of the projection lens 42 toward both right and left sides while being curved to the lighting-device forward side.

Next, the configuration of the ADB lighting device unit 20R will be described.

As shown in FIG. 2, the ADB lighting device unit 20R includes six projection lenses 32A, 32B, 32C, 32D, 32E, 32F disposed in a state of being arrayed in the right-left direction (that is, a vehicle-width direction) and six light-emitting elements 22A, 22B, 22C, 22D, 22E, 22F disposed on a lighting-device rearward side of the six projection lenses 32A to 32F, and is configured to form six respective small light distribution patterns by emitting outgoing lights from the six respective light-emitting elements 22A to 22F through the six respective projection lenses 32A to 32F in the lighting-device forward direction.

Each of the six light-emitting elements 22A to 22F is a white light-emitting diode, and includes a light-emitting surface having a rectangular shape (for example, a square shape). Moreover, the six light-emitting elements 22A to 22F are mounted on a common basal plate 24 in a state of being disposed at intervals in the right-left direction, such that the light-emitting surfaces are oriented in a lighting-device front direction. The basal plate 24 is formed in a horizontally-long rectangular shape, and a rear surface thereof is supported by a heatsink 26. In the heatsink 26, a body portion 26A that supports the basal plate 24 is formed in a horizontally-long rectangular shape along a vertical plane orthogonal to the lighting-device front-rear direction, and at both upper and lower end portions thereof, flange portions 26B that extend horizontally in a lighting-device rearward direction are formed.

The six projection lenses 32A to 32F is configured as a single lens member 30. A front surface 30a of the lens member 30 is configured by a convex cylindrical surface that extends in the right-left direction, and a rear surface 30b thereof is formed in a convex curved surface shape at each position of the six projection lenses 32A to 32F.

Among the six projection lenses 32A to 32F, in the second projection lens 32B from the right (the left in lighting-device front view), a convex curved surface configuring a rear surface 32Bb thereof has a roughly bilaterally symmetrical surface shape. Further, among the six light-emitting elements 22A to 22F, the second light-emitting element 22B from the right is disposed at a position roughly straight behind the projection lens 32B with respect to the right-left direction. Moreover, the curvature of the convex curved surface configuring the rear surface 32Bb is set such that the projection lens 32B outputs the outgoing light from the light-emitting element 22B roughly in the lighting-device front direction, from the front surface 30a of the lens member 30, as parallel light.

As shown in FIG. 3, the light-emitting element 22B is disposed at a position that is slightly displaced in a downward direction from straight behind the projection lens 32B with respect to a height direction. As for this, the same goes for the other five light-emitting elements 22A, 22C to 22F.

As shown in FIG. 2, in the projection lens 32A positioned at a right end portion, a convex curved surface configuring a rear surface 32Ab thereof has a surface shape that is slightly inclined to the right side toward the lighting-device rearward side. Further, the light-emitting element 22A positioned at a right end portion is disposed at a position that is slightly displaced from straight behind the projection lens 32A to the right side. Moreover, the curvature of the convex curved surface configuring the rear surface 32Ab is set such that the projection lens 32A outputs the outgoing light from the light-emitting element 22A in a direction that is slightly inclined to the left side with respect to the lighting-device front direction, from the front surface 30a of the lens member 30, as parallel light.

On the other hand, in the projection lens 32C at the third position from the right, a convex curved surface configuring a rear surface 32Cb thereof has a surface shape that is slightly inclined to the left side toward the lighting-device rearward side. Further, the light-emitting element 22C at the third position from the right is disposed at a position that is slightly displaced from straight behind the projection lens 32C to the left side. Moreover, the curvature of the convex curved surface configuring the rear surface 32Cb is set such that the projection lens 32C outputs the outgoing light from the light-emitting element 22C in a direction that is slightly inclined to the right side with respect to the lighting-device front direction, from the front surface 30a of the lens member 30, as parallel light.

In the projection lens 32D at the fourth position from the right, a convex curved surface configuring a rear surface 32Db thereof has a surface shape that is inclined further to the left side toward the lighting-device rearward side compared to the projection lens 32C. Further, the light-emitting element 22D at the fourth position from the right is disposed at a position that is displaced further to the left side from straight behind the projection lens 32D. Moreover, the curvature of the convex curved surface configuring the rear surface 32Db is set such that the projection lens 32D outputs the outgoing light from the light-emitting element 22D in a direction that is inclined further to the right side with respect to the lighting-device front direction, from the front surface 30a of the lens member 30, as parallel light.

In the projection lens 32E at the fifth position from the right, a convex curved surface configuring a rear surface 32Eb thereof has a surface shape that is inclined further to the left side toward the lighting-device rearward side compared to the projection lens 32D. Further, the light-emitting element 22E at the fifth position from the right is disposed at a position that is displaced further to the left side from straight behind the projection lens 32E. Moreover, the curvature of the convex curved surface configuring the rear surface 32Eb is set such that the projection lens 32E outputs the outgoing light from the light-emitting element 22E in a direction that is inclined further to the right side with respect to the lighting-device front direction, from the front surface 30a of the lens member 30, as parallel light.

In the projection lens 32F positioned at a left end portion, a convex curved surface configuring a rear surface 32Fb thereof has a surface shape that is inclined further to the left side toward the lighting-device rearward side compared to the projection lens 32E. Further, the light-emitting element 22F positioned at a left end portion is disposed at a position that is displaced further to the left side from straight behind the projection lens 32F. Moreover, the curvature of the convex curved surface configuring the rear surface 32Fb is set such that the projection lens 32F outputs the outgoing light from the light-emitting element 22F in a direction that is inclined further to the right side with the lighting-device front direction (specifically, a direction that is inclined from the lighting-device front direction by about 20°), from the front surface 30a of the lens member 30, as parallel light.

In this way, as the configuration of the ADB lighting device unit 20R, the outgoing light from the projection lens 32F positioned at the left end portion goes in a direction that is greatly inclined to the right side from the lighting-device front direction, and thereby, the emission light from the ADB lighting device unit 20R is avoided from being carelessly intercepted by the low-beam lighting device unit 40R, even though the low-beam lighting device unit 40R is disposed on the lighting-device forward side of the left side of the ADB lighting device unit 20R in the position relation of the partial overlap with the ADB lighting device unit 20R as shown in FIG. 1.

As shown in FIG. 2, a partition member 28 for preventing the outgoing lights from the six respective light-emitting elements 22A to 22F from entering a projection lens other than the projection lenses 32A to 32F positioned at a lighting-device forward vicinity thereof is disposed on the lighting-device rearward side of the lens member 30. The partition member 28 includes partition plates 28A that extend in a plate shape in the lighting-device front-rear direction along vertical surfaces at five spots among the six projection lenses 32A to 32F, and a coupling support portion 28B that couples the partition plates 28A at the five spots, at rear end portions thereof. In each partition plate 28A, a front end portion thereof extends to a position close to the rear surface 30b of the lens member 30, and a rear end portion thereof is coupled to the coupling support portion 28B in a state of being formed so as to avoid the interference with the basal plate 24.

The lens member 30 includes a pair of right and left mounting flange portions 34 that is formed so as to extend in an L-shape in the lighting-device rearward direction, on both right and left sides of the six projection lenses 32A to 32F. Moreover, the lens member 30 is fixed to the heatsink 26, at the right and left mounting flange portions 34. On that occasion, in a state where both right and left end portions of the coupling support portion 28B of the partition member 28 are sandwiched by the right and left mounting flange portions 34 and the heatsink 26, fastening is performed at a plurality of spots by screws 36, and thereby, the lens member 30 and the partition member 28 are configured to be jointed to the heatsink 26.

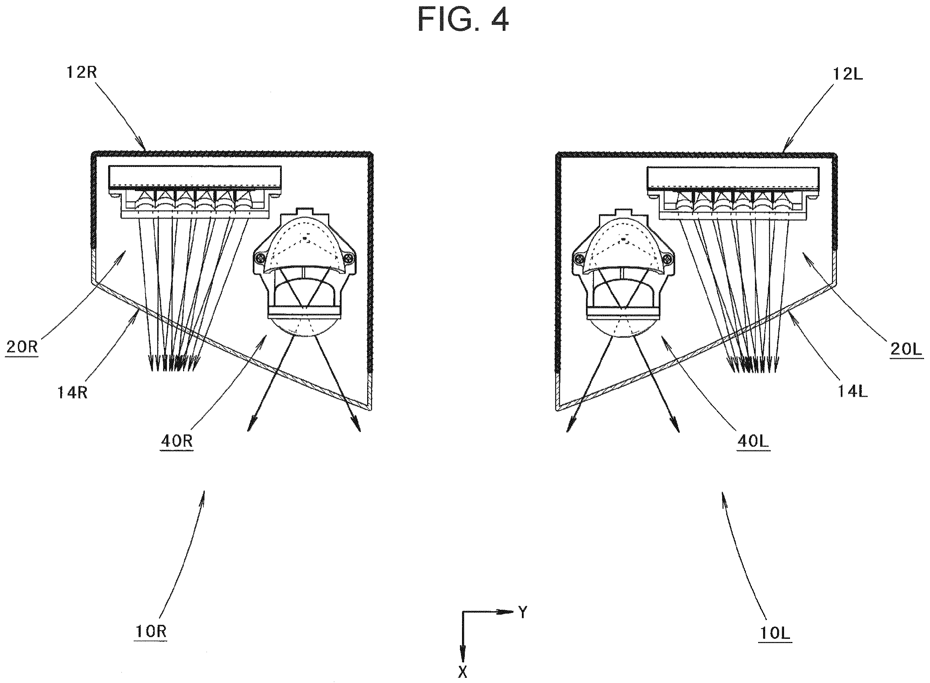

As shown in FIG. 4, as the whole of the vehicle, the vehicle lighting device 10R is disposed at the right front end portion of the vehicle, and a vehicle lighting device 10L is disposed at a left front end portion of the vehicle.

The vehicle lighting device 10L on the left side is configured such that a low-beam lighting device unit 40L having the same configuration as the low-beam lighting device unit 40R of the vehicle lighting device 10R and an ADB lighting device unit 20L having a configuration symmetrical to the ADB lighting device unit 20R of the vehicle lighting device 10R are disposed in a lighting chamber formed by a lamp body 12L and a translucent cover 14L in a position relation of the symmetry to the vehicle lighting device 10R.

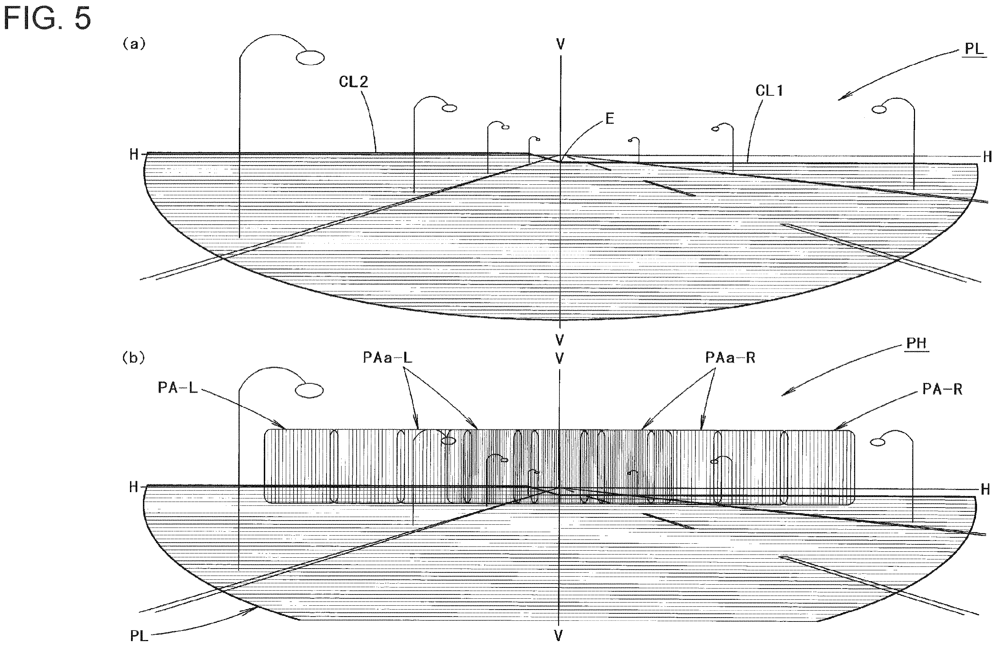

FIG. 5 is a diagram showing light distribution patterns that are formed by emission lights from the left and right vehicle lighting devices 10L, 10R, in which (a) is a diagram showing a low-beam light distribution pattern PL in a perspective manner and (b) is a diagram showing a high-beam light distribution pattern PH in a perspective manner.

As shown in FIG. 5(a), in the low-beam light distribution pattern PL, light distribution patterns that are formed by the emission lights from the low-beam lighting device units 40L, 40R of the left and right vehicle lighting devices 10L, 10R and that have an identical form are superimposed.

The low-beam light distribution pattern PL is a low-beam light distribution pattern for left light distribution, and has cutoff lines CL1, CL2 having different right-left levels, at an upper end edge thereof. The cutoff lines CL1, CL2 extend in the horizontal direction so as to have different right-left levels from a V-V line that vertically passes through H-V that is a vanishing point in the lighting-device front direction. A portion on the right side of the V-V line is formed as an oncoming-lane-side cutoff line CL1, and a portion on the left side of the V-V line is formed as an own-vehicle-lane-side cutoff line CL2 that is next to an inclined portion so as to have a higher level than the oncoming-lane-side cutoff line CL1. In the low-beam light distribution pattern PL, an elbow point E that is an intersection point between the oncoming-lane-side cutoff line CL1 and the V-V line is positioned at about 0.5° to 0.6° below the H-V.

The high-beam light distribution pattern PH shown in FIG. 5(b) is a light distribution pattern that is formed by the superimposition of left and right ADB light distribution patterns PA-L, PA-R on the low-bean light distribution pattern PL.

The left and right ADB light distribution patterns PA-L, PA-R are formed as horizontally-long light distribution patterns that extend in the right-left direction in an elongated manner on an H-H line that horizontally passes through the H-V.

The left and right ADB light distribution patterns PA-L, PA-R, at lower end regions thereof, overlap with a cutoff-line vicinity region of the low-beam light distribution pattern PL. Thereby, the high-beam light distribution pattern PH is formed as a light distribution pattern that has no gap between the low-beam light distribution pattern PL and the ADB light distribution patterns PA-L, PA-R.

The ADB light distribution pattern PA-L is a light distribution pattern that is formed by the emission light from the ADB lighting device unit 20L of the vehicle lighting device 10L on the left side, and the ADB right distribution pattern PA-R is a light distribution pattern that is formed by the emission light from the ADB lighting device unit 20R of the vehicle lighting device 10R on the right side. The two have forms that are symmetrical about the V-V line.

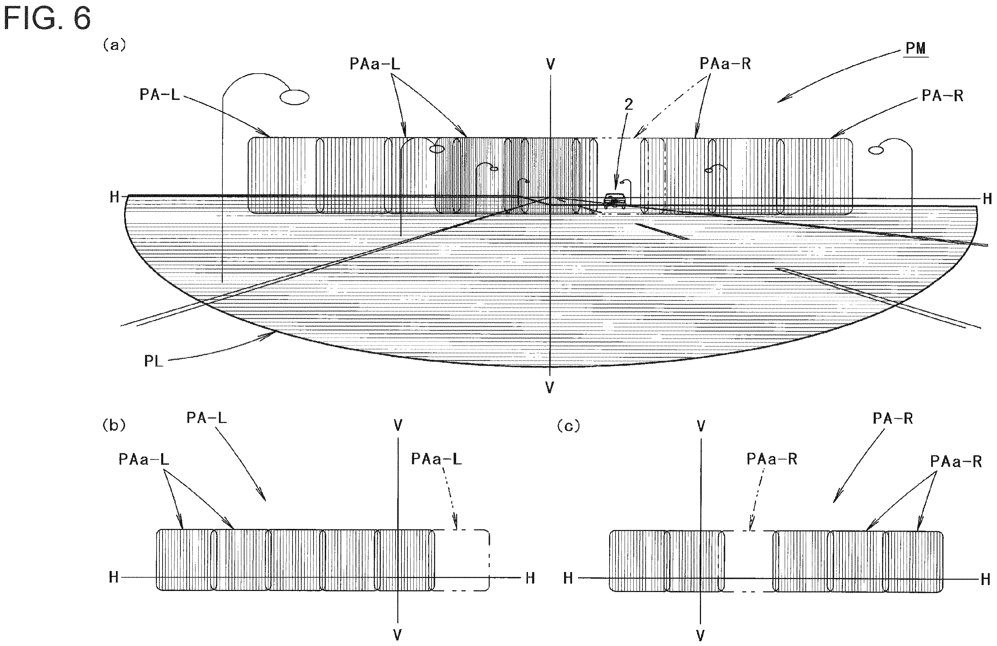

FIG. 6(b) is a diagram in which the ADB light distribution pattern PA-L is taken out and shown, and FIG. 6(c) is a diagram showing the ADB light distribution pattern PAR.

As shown in FIG. 6(c), the ADB light distribution pattern PA-R is formed as a synthetic light distribution pattern of six small light distribution patterns PAa-R.

The six small light distribution patterns PAa-R are roughly rectangular light distribution patterns that are formed by the outgoing lights from the six light-emitting elements 22A to 22F respectively.

As shown in FIG. 3, the light-emitting element 22B is disposed at a position that is slightly displaced in the downward direction from straight behind the projection lens 32B with respect to the height direction, and therefore, the six small light distribution patterns PAa-R are formed so as to cross the H-H line in the height direction at positions near lower end portions thereof.

The outgoing light from the second light-emitting element 22B from the right is output through the projection lens 32B roughly in the lighting-device front direction, and therefore, the second small light distribution pattern PAa-R from the left is formed so as to cross the V-V line in the right-left direction.

The outgoing light from the light-emitting element 22A positioned at the right end portion is output through the projection lens 32A in the direction that is slightly inclined to the left side with respect to the lighting-device front direction, and therefore, the small light distribution pattern PAa-R at a left end portion is formed in a state of mildly overlapping with the second small light distribution pattern PAa-R from the left.

On the other hand, the outgoing light from the third light-emitting element 22C from the right is output through the projection lens 32C in the direction that is slightly inclined to the right side with respect to the lighting-device front direction, and therefore, the third small light distribution pattern PAa-R from the left is formed in a state of mildly overlapping with the second small light distribution pattern PAa-R from the left. Similarly, the fourth to sixth small light distribution patterns PAa-R from the right are formed in a state of mildly overlapping with each other.

As shown in FIG. 6(b), the ADB light distribution pattern PA-L is formed as a synthetic light distribution pattern of six small light distribution patterns PAa-L. The six small light distribution patterns PAa-L are formed in a position relation of the symmetry to the six small light distribution patterns PAa-LR constituting the ADB light distribution pattern PA-R about the V-V line.

As shown in FIG. 5(b), in the high-beam light distribution pattern PH, the left and right ADB light distribution patterns PA-L, PA-R are formed in a state of partially overlapping with each other at the vicinity of the V-V line. Therefore, the high-beam light distribution pattern PH is formed as a light distribution pattern in which an H-V vicinity region is bright, and thereby, the long-distance visibility of the vehicle forward traveling road is high.

FIG. 6(a) is a diagram showing an intermediate light distribution pattern PM that is formed by the emission lights from the left and right vehicle lighting devices 10L, 10R.

As shown in FIG. 6(a), the intermediate light distribution pattern PM is a light distribution pattern in which a part of the left and right ADB light distribution patterns PAL, PA-R disappears from the high-beam light distribution pattern PH shown in FIG. 5(b).

Specifically, in the intermediate light distribution pattern PM shown in FIG. 6(a), among the six small light distribution patterns PAa-L constituting the ADB light distribution pattern PA-L, the small light distribution pattern PAa-L at a right end portion disappears as shown in FIG. 6(b), and among the six small light distribution patterns PAa-R constituting the ADB light distribution pattern PA-R, the third small light distribution pattern PAa-R from the left disappears as shown in FIG. 6(c).

As shown in FIG. 6(a), the light distribution pattern in which the small light distribution pattern PAa-L at the right end portion in the ADB light distribution pattern PAL and the third small light distribution pattern PAa-R from the left in the ADB light distribution pattern PA-R disappear is formed as the intermediate light distribution pattern PM, and thereby, a closest possible light distribution pattern to the high-beam light distribution pattern PH is formed while the emission lights from the left and right vehicle lighting devices 10L, 10R are not thrown to an oncoming vehicle 2. Thereby, the vehicle forward traveling road is irradiated as widely as possible within a range in which glare is not given to a driver of the oncoming vehicle 2.

Moreover, with the change in the position of the oncoming vehicle 2, the form of the intermediate light distribution pattern PM can be changed by sequentially switching the light-emitting element that is the object of light out.

The existence of the oncoming vehicle 2 is detected by an unillustrated vehicle-mounted camera or the like. Moreover, also in the case where a proceeding vehicle exists on the vehicle forward traveling road or a pedestrian exists at a road shoulder portion, this is detected and the glare is avoided from being given, by the disappearance of a part of the small light distribution patterns.

Next, function effects of the embodiment will be described.

The vehicle lighting device 10R according to the embodiment includes the ADB lighting device unit 20R configured to be able to form the six small light distribution patterns PAa-R in a parallel arrangement by emitting the outgoing lights from the six light-emitting elements 22A to 22F through the six projection lenses 32A to 32F in the lighting-device forward direction, and therefore, can form the ADB light distribution pattern PA-R with all or some of the six small light distribution patterns PAa-R.

Furthermore, the ADB lighting device unit 20R includes the six projection lenses 32A to 32F disposed in a state of being arrayed in the right-left direction and the six light-emitting elements 22A to 22F disposed on the lighting-device rearward side thereof, and is configured to form the six respective small light distribution patterns PAa-R by emitting the outgoing lights from the six respective light-emitting elements 22A to 22F through the six respective projection lenses 32A to 32F in the lighting-device forward direction, and therefore, the six light-emitting elements 22A to 22F can be configured to disposed so as to be sufficiently away from each other. Thereby, the heat release of the six light-emitting elements 22A to 22F is easily performed, and therefore, the heat generation can be restrained.

On that occasion, the ADB lighting device unit 20R is configured such that the outgoing light from the projection lens 32F positioned at the left end portion (one end portion in the right-left direction) in the ADB lighting device unit 20R is emitted in the direction that is inclined to the side of the right end portion (the direction that is inclined to the side of the other end portion in the right-left direction) with respect to the lighting-device front direction. Therefore, even though the low-beam lighting device unit 40R (another structure) is disposed at the left lateral vicinity of the ADB lighting device unit 20R, it is possible to prevent a part of the outgoing light from the projection lens 32F from being intercepted by the low-beam lighting device unit 40R, and thereby, it is possible to form the ADB light distribution pattern PA-R as a desired form.

In this way, with the embodiment, in the vehicle lighting device 10R including the ADB lighting device unit 20R, it is possible to form the ADB light distribution pattern PA-R as a desired form, while restraining the heat generation of the six light-emitting elements 22A to 22F constituting the ADB lighting device unit 20R.

In addition, the ADB lighting device unit 20R is configured to emit the outgoing lights from the six respective light-emitting elements 22A to 22F through the six respective projection lenses 32A to 32F in the lighting-device forward direction, and therefore, it is possible to decrease the front-rear width, and thereby, to increase the disposition freedom of the ADB lighting device unit 20R.

Further, the ADB lighting device unit 20R is configured such that the outgoing light from a projection lens that is of the six projection lenses 32A to 32F and that is at a position more distant from the right end portion is emitted in a direction that is more greatly inclined to the side of the right end portion, and therefore, the six small light distribution patterns PAa-R can be easily formed in a well-balanced manner.

Furthermore, in the embodiment, the six projection lenses 32A to 32F are configured by the single lens member 30, the front surface 30a is configured by the single curved surface, the rear surfaces 32Ab to 32Fb (portions that are on the rear surface 30b of the lens member 30 and that respectively correspond to the ADB lighting device unit 20R) of the six projection lenses 32A to 32F are configured by convex curved surfaces, and the orientations of the convex curved surfaces are set to orientations that are different from each other among the six projection lenses 32A to 32F. Therefore, it is possible to obtain the above function effects while increasing the design level of the six projection lenses 32A to 32F.

The vehicle lighting device 10R according to the embodiment includes the low-beam lighting device unit 40R for forming the low-beam light distribution pattern PL, the ADB lighting device unit 20R and the low-beam lighting device unit 40R are configured to be disposed in a state of being adjacent in the right-left direction, in the lighting chamber that is formed by the lamp body 12R and the translucent cover 14R, the ADB lighting device unit 20R is positioned on the vehicle-width-directional outer side of the low-beam lighting device unit 40R, and the left end portion (one end portion in the right-left direction) is positioned on the vehicle-width-directional inner side. Therefore, it is possible to obtain the following function effect.

That is, in a general vehicle lighting device, similarly to the vehicle lighting device 10R according to the embodiment, the translucent cover 14R is configured to be formed so as to extend while being inclined to the lighting-device rearward side from the vehicle-width-directional inner side toward the vehicle-width-directional outer side. However, in the vehicle lighting device 10R, it is possible to efficiently dispose the ADB lighting device unit 20R and the low-beam lighting device unit 40R in the lighting chamber, by adopting a configuration in which the ADB lighting device unit 20R having a narrow front-rear width is disposed so as to be positioned on the vehicle-width-directional outer side.

On that occasion, it is possible to avoid the outgoing light from the projection lens 32F positioned at the left end portion (the end portion on the vehicle-width-directional inner side) of the ADB lighting device unit 20R from being carelessly intercepted by the low-beam lighting device unit 40R. Therefore, the ADB lighting device unit 20R and the low-beam lighting device unit 40R can be disposed in a state of being close in the right-left direction, and thereby, the right-left width can be avoided from being too wide as the configuration of the vehicle lighting device 10R.

In the embodiment, the low-beam lighting device unit 40R is configured to include the projection lens 42, the light source 44 that is disposed on the lighting-device rearward side of the back focus F, the reflector 46 that reflects the outgoing light from the light source 44 toward the projection lens 42, and the shade 48 that intercepts a part of the reflected light from the reflector CL1, CL2 in a state of being disposed between the reflector 46 and the projection lens 42, for forming the cutoff lines CL1, CL2 of the low-beam light distribution pattern PL. Therefore, it is possible to easily form the low-beam light distribution pattern PL having the clear cutoff lines CL1, CL2.

Meanwhile, in the case where such a configuration is employed, the front-rear length of the low-beam lighting device unit 40R is long, and therefore, if the outgoing light from the projection lens 32F disposed at the left end portion (that is, the end portion on the low-beam lighting device unit 40R side) is emitted in a left oblique direction (an oblique direction that is inclined to the side of the low-beam lighting device unit 40R) with respect to the lighting-device front direction, a part of the emission light is easily intercepted by the low-beam lighting device unit 40R. Accordingly, the employment of the configuration in the embodiment is particularly effective.

Further, in the embodiment, the ADB lighting device unit 20R is disposed in a state of being displaced to the lighting-device rearward side of the low-beam lighting device unit 40R. In such a case, when the outgoing light from the projection lens 32F is emitted in a left oblique direction, a part of the emission light is easily intercepted by the low-beam lighting device unit 40R, and therefore, the employment of the configuration in the embodiment is particularly effective.

In the above embodiment, the six projection lenses 32A to 32F have been described as being configured as the single lens member 30, but they may be configured by lens members that are independent from each other.

In the above embodiment, the low-beam lighting device unit 40R has been described as being configured as a PES-type lighting device unit, but may be configured as another type of lighting device unit (for example, a parabola-type lighting device unit, a projector-type lighting device unit using direct light, or the like).

In the above embodiment, the projection lens 32F positioned at the left end portion has been described as being configured to output the outgoing light from the light-emitting element 22F in the direction that is inclined from the lighting-device front direction by about 20°, from the front surface 30a of the lens member 30, as parallel light, but the specific output direction is not particularly limited. On that occasion, a configuration in which the emission is performed in a direction that is inclined from the lighting-device front direction by 15° or more is preferable for preventing a part of the outgoing light from the projection lens 32F from being carelessly intercepted by another structure.

In the above embodiment, the six light-emitting elements 22A to 22F have been described as being disposed in a state of gradually deviating from the six projection lenses 32A to 32F in the right-left direction. However, it is allowable to adopt a configuration in which the output directions from the six respective projection lenses 32A to 32F are controlled by disposing the six light-emitting elements 22A to 22F at regular intervals and appropriately setting the shapes of the convex curved surfaces configuring the rear surfaces 32Ab to 32Fb of the six projection lenses 32A to 32F. Further, it is allowable to adopt a configuration in which the output directions from the six respective projection lenses 32A to 32F are controlled by maintaining the convex curved surfaces configuring the rear surfaces 32Ab to 32Fb of the six projection lenses 32A to 32F in a certain shape and adjusting the deviation amounts of the six light-emitting elements 22A to 22F in the right-left direction.

Next, modifications of the above embodiment will be described.

First, a first modification of the above embodiment will be described.

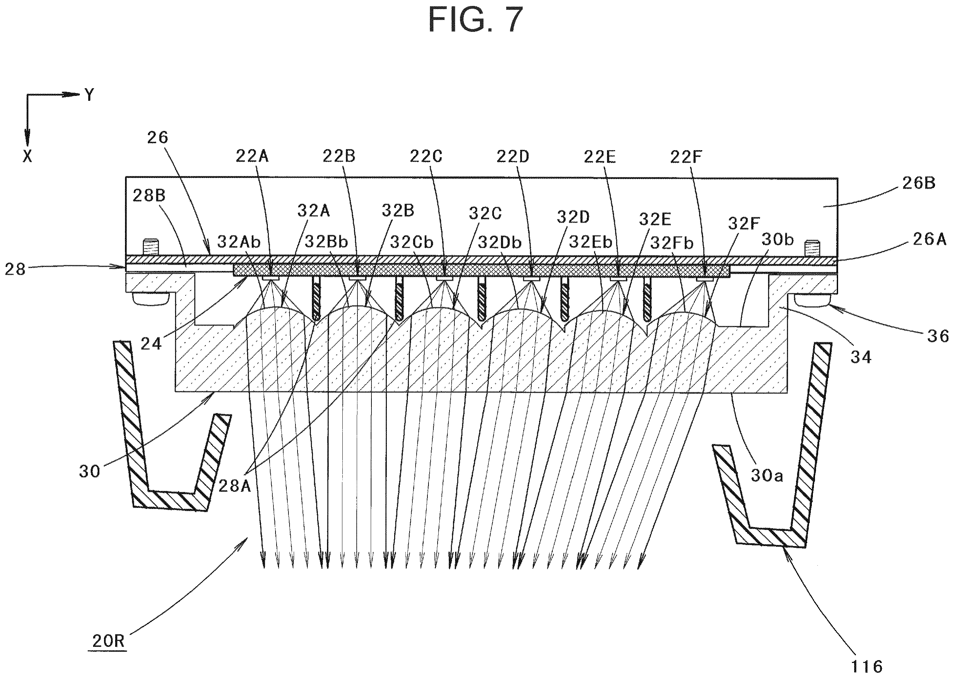

FIG. 7 is a diagram showing a principal part of a vehicle lighting device according to the modification in the same manner as FIG. 2.

As shown in FIG. 7, the basic configuration in the modification is the same as the case of the above embodiment, but there is a partial difference from the case of the above embodiment in that an extension panel 116 is disposed at the vicinity of the ADB lighting device unit 20R instead of the low-beam lighting device unit 40R in the above embodiment.

The extension panel 116 is disposed in a state of surrounding the ADB lighting device unit 20R over the whole circumference. On that occasion, the extension panel 116 is disposed in a position relation of a partial overlap with the lens member 30 of the ADB lighting device unit 20R in lighting-device front view.

By employing the configuration in the modification, by the extension panel 116, the mounting flange portions 34 of the lens member 30, the screws 36, and the like can be avoided from being seen when the ADB lighting device unit 20R is observed from the exterior, and thereby, it is possible to achieve the improvement in the visual quality of the ADB lighting device unit 20R.

On that occasion, the projection lens 32F positioned at the left end portion is configured to output the outgoing light from the light-emitting element 22F in a direction that is greatly inclined to the right side with respect to the lighting-device front direction, from the front surface 30a of the lens member 30, and the projection lens 32A positioned at the right end portion is configured to output the outgoing light from the light-emitting element 22A in a direction that is slightly inclined to the left side with respect to the lighting-device front direction, from the front surface 30a of the lens member 30. Therefore, the outgoing light can be avoided from being carelessly intercepted by the extension panel 116.

Next, a second modification of the above embodiment will be described.

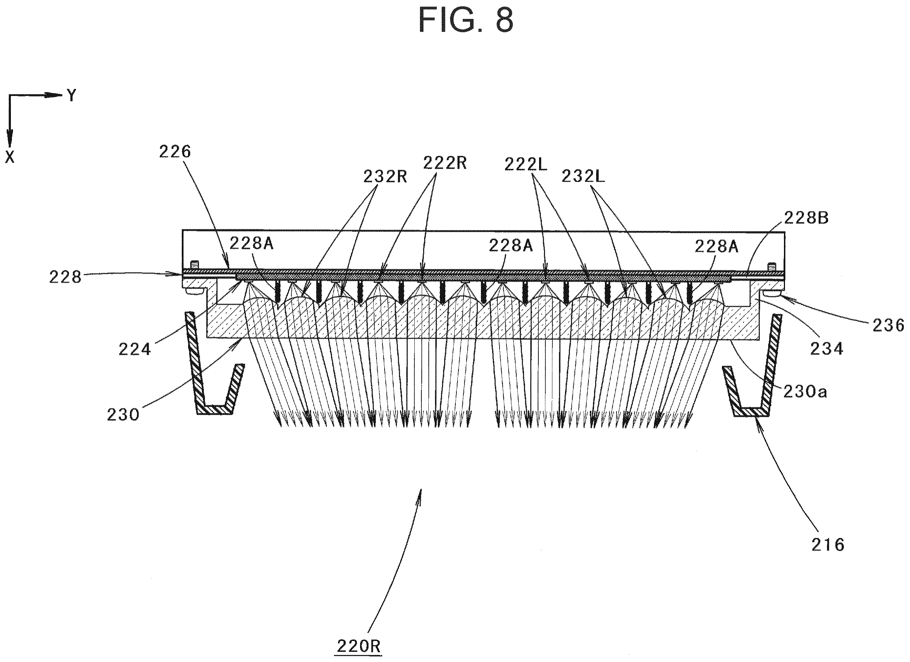

FIG. 8 is a diagram showing a principal part of a vehicle lighting device according to the modification in the same manner as FIG. 2.

As shown in FIG. 8, the modification has a configuration in which the left and right ADB lighting device units 20L, 20R in the above embodiment are integrally formed, as the configuration of an ADB lighting device unit 220R.

Specifically, in the ADB lighting device unit 220R, a lens member 230 thereof has a shape in which the lens member 30R of the ADB lighting device unit 20R in the above embodiment is cut at a left end position of the projection lens 32F, and is flipped horizontally, and the two are connected.

Thereby, the lens member 230 is configured to include six projection lenses 232R having the same configurations as the six projection lenses 32A to 32F in the lens member 30R in the above embodiment and six projection lenses 232L having shapes symmetrical to them.

Further, the ADB lighting device unit 220R has a configuration in which six light-emitting elements 222R having the same configurations as the six light-emitting elements 22A to 22F in the above embodiment are disposed in the same position relation as the case of the above embodiment and six light-emitting elements 222L are disposed in a position relation symmetrical to them.

Accordingly, in the ADB lighting device unit 220R, six pairs of left and right light-emitting elements 222L, 222R are mounted on a basal plate 224 that extends so as to be longer in the right-left direction than the basal plate 24 in the above embodiment, and the basal plate 224 is supported by a heatsink 226 that extends so as to be longer in the right-left direction than the heatsink 26 in the above embodiment.

Further, the ADB lighting device unit 220R has a configuration in which a partition member 228 including a plurality of partition plates 228A is disposed similarly to the partition member 28 of the ADB lighting device unit 20R in the above embodiment. Moreover, in a state where both right and left end portions of a coupling support portion 228B of the partition member 228 are sandwiched by a pair of right and left mounting flange portions 234 of the lens member 230 and the heatsink 226, fastening is performed at a plurality of spots by screws 236, and thereby, the lens member 230 and the partition member 228 are configured to be jointed to the heatsink 226.

Also in the modification, an extension panel 216 is disposed in a state of surrounding the ADB lighting device unit 220R over the whole circumference. On that occasion, the extension panel 216 is disposed in a position relation of a partial overlap with the lens member 230 of the ADB lighting device unit 220R in lighting-device front view.

By employing the configuration in the modification, the left and right ADB light distribution patterns PA-L, PA-R (see FIGS. 6(b) and 6(c)) that are formed by the emission lights from the left and right ADB lighting device units 20L, 20R in the above embodiment can be formed by the emission light from the ADB lighting device unit 220R.

Moreover, in the case of a configuration of including an ADB lighting device unit (not illustrated) having a configuration symmetrical to the ADB lighting device unit 220R as the whole vehicle, it is possible to double the brightness of the left and right ADB light distribution patterns PA-L, PA-R.

By employing the configuration in the modification, by the extension panel 216, the mounting flange portions 234 of the lens member 230, the screws 236, and the like can be avoided from being seen when the ADB lighting device unit 220R is observed from the exterior, and thereby, it is possible to achieve the improvement in the visual quality of the ADB lighting device unit 220R.

On that occasion, the projection lenses 232L, 232R positioned at both left and right end portions are respectively configured to output the outgoing lights from the light-emitting elements 222L, 222R positioned at lighting-device rearward vicinities thereof in a direction greatly inclined to the right side and a direction greatly inclined to the left side (that is, directions of getting close to each other) with respect to the lighting-device front direction, from the front surface 230a of the lens member 230, and therefore, the outgoing lights can be easily avoided from being carelessly intercepted by the extension panel 216.

Numerical values shown as specifications in the above embodiment and the modifications are just examples, and naturally, different values may be set when appropriate.

Further, the invention in the present application is not limited to the configurations described in the above embodiment and the modifications, and other configurations in which various alterations are made can be employed.

The present international application claims priority to Japanese Patent Application No. 2023-015092 filed on February 3, 2023, and all contents in Japanese Patent Application No. 2023-015092 are incorporated in the present international application.

The above descriptions about the particular embodiments of the present invention has been presented for the purpose of exemplification. They are not intended to be exhaustive or limit the present invention to only the described forms. A person skilled in the art understands that a large number of modifications and alterations can be made in the context of the above described contents.

### Reference Signs List

2 oncoming vehicle
10L, 10R vehicle lighting device
12L, 12R lamp body
14L, 14R translucent cover
20L, 20R, 220R ADB lighting device unit
22A, 22B, 22C, 22D, 22E, 22F, 222L, 222R light-emitting element
24, 224 basal plate
26, 226 heatsink
26A body portion
26B flange portion
28, 228 partition member
28A, 228A partition plate
28B, 228B coupling support portion
30, 230 lens member
30a, 230a front surface
30b, 32Ab, 32Bb, 32Cb, 32Db, 32Fb rear surface
32A, 32B, 32C, 32D, 32E, 32F, 232L, 232R projection lens
34, 234 mounting flange portion
36, 52, 236 screw
40L, 40R low-beam lighting device unit
42 projection lens
44 light source
46 reflector
46a reflection surface
48 shade
48a upward reflection surface
50 holder member
116, 216 extension panel
Ax optical axis
CL1 oncoming-lane-side cutoff line
CL2 own-vehicle-lane-side cutoff line
E elbow point
F back focus
PA-L, PA-R ADB light distribution pattern
PAa-L, PAa-R small light distribution pattern
PH high-beam light distribution pattern
PL low-beam light distribution pattern
PM intermediate light distribution pattern

## Claims

1. A vehicle lighting device comprising an ADB lighting device unit configured to be able to form a plurality of small light distribution patterns in a parallel arrangement at a position that overlaps with a cutoff line of a low-beam light distribution pattern, **characterized in that**:
the ADB lighting device unit includes a plurality of projection lenses that is disposed in a state of being arrayed in a right-left direction, and a plurality of light-emitting elements that is disposed on a lighting-device rearward side of the projection lenses, and is configured to form the respective small light distribution patterns by emitting outgoing lights from the respective light-emitting elements through the respective projection lenses in a lighting-device forward direction; and
the ADB lighting device unit is configured such that an outgoing light from a projection lens that is of the projection lenses and that is positioned at one end portion in the right-left direction is emitted in a direction that is inclined to a side of the other end portion in the right-left direction, with respect to a lighting-device front direction.

2. The vehicle lighting device according to claim 1, **characterized in that** the ADB lighting device unit is configured such that the outgoing light from a projection lens that is of the projection lenses and that is at a position more distant from the other end portion is emitted in a direction that is more greatly inclined to the side of the other end portion.

3. The vehicle lighting device according to claim 1 or 2, **characterized in that**:
the projection lenses are configured by a single lens member;
a front surface of the lens member is configured by a single curved surface or flat surface; and
portions that are on a rear surface of the lens member and that respectively correspond to the projection lenses are configured by convex curved surfaces, and orientations of the convex curved surfaces are set to orientations that are different from each other among the projection lenses.

4. The vehicle lighting device according to claim 1 or 2, comprising a low-beam lighting device unit configured to form the low-beam light distribution pattern, **characterized in that**:
the ADB lighting device unit and the low-beam lighting device unit are disposed in a state of being adjacent in the right-left direction, in a lighting chamber that is provided by a lamp body and a translucent cover; and
the ADB lighting device unit is disposed so as to be positioned on a vehicle-width-directional outer side of the low-beam lighting device unit, and an end portion on a vehicle-width-directional inner side is set as the one end portion.

5. The vehicle lighting device according to claim 4, **characterized in that** the low-beam lighting device unit includes a projection lens, a light source that is disposed on the lighting-device rearward side of a back focus of the projection lens, a reflector that reflects the outgoing light from the light source toward the projection lens, and a shade that intercepts a part of a reflected light from the reflector in a state of being disposed between the reflector and the projection lens, for forming the cutoff line.

6. The vehicle lighting device according to claim 4, **characterized in that** the ADB lighting device unit is disposed in a state of being displaced to the lighting-device rearward side of the low-beam lighting device unit.
